# EUROPEAN PATENT SPECIFICATION

(11) **EP 1 472 687 B1**
(45) Date of publication and mention of the grant of the patent: **17.11.2010**
(21) Application number: 02700979.4
(22) Date of filing: 07.02.2002
(51) Int. Cl.: G11B 11/00

(54) **A PORTABLE DATA STORAGE AND IMAGE RECORDING DEVICE CAPABLE OF DIRECT CONNECTION TO A COMPUTER USB PORT**
TRAGBARE DATENSPEICHER- UND BILDAUFZEICHNUNGS EINRICHTUNG MIT DER FÄHIGKEIT ZUR DIREKT VERBINDUNG MIT EINEM COMPUTER-USB-PORT
DISPOSITIF PORTABLE DE STOCKAGE DE DONNEES ET D'ENREGISTREMENT D'IMAGES POUVANT ETRE RACCORDE DIRECTEMENT A UN PORT USB D'ORDINATEUR

(43) Date of publication of application: 03.11.2004
(73) Proprietor: Trek 2000 International Ltd, Singapore 508769 (SG)
(72) Inventor: POO, Teng, Pin, Singapore 460044 (SG); KUAN, Mun, Kwong, Singapore 440003 (SG)
(74) Representative: Howe, Steven
(86) International application number: PCT/SG2002/000021
(87) International publication number: WO 2003/073422

(56) References cited:
- WO-A-01/73570
- WO-A1-01/61692
- DE-U1- 20 117 530

## Description

### CROSS REFERENCE TO RELATED APPLICATIONS

The present application is related to the following United States patent applications, which applications are owned by the owner of the present invention.
U.S. Patent Application Serial No. 09/803,173, entitled "PORTABLE DATA STORAGE DEVICE CAPABLE OF BEING DIRECTLY CONNECTED VIA USB PLUG TO A COMPUTER" (Attorney Docket No. 1601457-0004);
U.S. Patent Application Serial No. 09/803,157, entitled "PORTABLE DATA STORAGE DEVICE HAVING SECURE MODE OF OPERATION" (Attorney Docket No. 1601457-0005);
U.S. Patent Application Serial No. 09/898,365, entitled "A PORTABLE DEVICE HAVING BIOMETRICS-BASED AUTHENTICATION CAPABILITIES" (Attorney Docket No. 1601457-0007); and
U.S. Patent Application Serial No. 09/898,310, entitled "A PORTABLE DEVICE HAVING BIOMETRICS-BASED AUTHENTICATION CAPABILITIES" (Attorney Docket No. 1601457-0008).

### BACKGROUND OF THE INVENTION

### Field of the Invention

The present invention relates to a portable storage device, and in particular to a portable storage device having image and/or audio capture capabilities.

### Description of the Related Art

Portable data storage devices have become a class of indispensable peripherals that are widely utilized in business, educational and home computing. These devices are generally not permanently fitted to a particular host platform, such as a personal computer (PC). Rather, they can be conveniently removed from and attached to any computer having the appropriate connection port (e.g., a serial bus port like a USB port or an IEEE 1394 ("Firewire") port). Thus, these portable data storage devices enable a user to transfer data among different computers that are not otherwise connected. A popular type of portable storage device utilizes a non-volatile solid-state memory (e.g., flash memory) as the storage medium and so does not require moving parts or a mechanical drive mechanism for accessing the data. The absence of a drive mechanism enables these portable solid-state memory devices to be more compact than surface storage devices such as magnetic disks and CD-ROMs.

Portable devices such as digital cameras are known for acquiring images and processing/storing the images in a digital format. In general, devices such as digital cameras focus an image via a lens on the surface of an image-sensing device such as a charge-coupled device (CCD) or a MOS-type image photographing element. The image-sensing device converts the optical image into electrical signals representative of the image. The electrical signals are then digitized through an A/D converter. Thereafter, the image may be processed to optimize visual aspects of the image and/or stored, typically on a flash memory card. A conventional digital camera is disclosed for example in U.S. Patent No. 6,208,380 B1 to Misawa, which patent is hereby incorporated by reference in its entirety herein.

It is known to download images from a digital camera to a host platform such as a PC for further processing, viewing, printing, etc. However, many digital camera manufacturers use proprietary standards in the physical interface between the camera and host computer, and/or in the creation and storage of the image within the camera. In the event such proprietary standards are used, proprietary hardware and/or software are required on the host platform in order to download and process digital images from the camera to the host platform. For example, U.S. Patent No. 6,111,604 to (Hashimoto et al.), which is used for the two-part form delimitation of claim 1, discloses a system for connecting a digital camera to a host computer and for converting the image signals from within the camera to a format compatible with the host platform. Also, US 2001/0010550 A1, discloses a digital camera with memory, having a PC-card shaped port of its body in that the camera can be connected directly into the PC-card interface slot.

### SUMMARY OF THE INVENTION

It is therefore an advantage of the present invention to provide a method and system for capturing image and/or audio information and storing the information on a portable storage medium.

It is another advantage of the present invention to provide a method and system for downloading image and/or audio information from a device that is compatible with the universal serial bus (USB) standard.

It is a further advantage of the present invention to provide a method and system for storing image and/or audio information in a format which is compatible with standard software protocols on a host platform such as an IBM PC or an Apple Macintosh PC.

These and other advantages are provided by the present invention which in preferred embodiments relates to a system and method for capturing image and/or audio data, processing the image and/or audio data, and storing the processed image and/or audio data. An aspect of the present invention is defined in claim 1. In a preferred embodiment, the non-volatile memory comprises flash memory.

In a preferred embodiment, the portable device is compatible with the universal serial bus (USB) standard and includes a USB connector. In this embodiment, the integrated circuit includes a USB device controller, which serves to control the communication between the portable device and the host platform.

As part of the processing operation in a preferred embodiment, the data is converted into a standard file format that is compatible and recognizable by the host platform to which the portable device may be coupled. After conversion into a standard file format, the data may either be stored in the non-volatile memory, or uploaded directly to the host platform. The standard file formats for storing still image data include but are not limited to JPEG, GIF and PICT II. Standard file formats for storing continuous video and/or audio data include but are not limited to MPEG file formats.

### BRIEF DESCRIPTION OF THE DRAWINGS

The accompanying drawings, which are incorporated in and constitute a part of this specification, illustrate several embodiments of the invention and, together with the description, serves to explain the principles of the invention.
Figure 1A is a block diagram illustrating functional blocks of one embodiment of the portable device of the present invention and an illustrative operational configuration thereof.
Figure 1B is a block diagram illustrating functional blocks of another embodiment of the portable device of the present invention.
Figure 2 is a front perspective view of a portable device with an integrated digital camera module in accordance with one embodiment of the present invention.
Figure 3 is a front perspective view of an alternative example with the portable device coupled to the host platform via a flexible communications cable having a USB compatible plug for being received in the USB port of a host platform.
Figure 4 is a front perspective view of a further alternative example with the integrated circuit portion of the portable device coupled directly to the USB port of a host platform, and the digital camera module of the portable device connected to the integrated circuit portion via a flexible communications cable.

### DETAILED DESCRIPTION

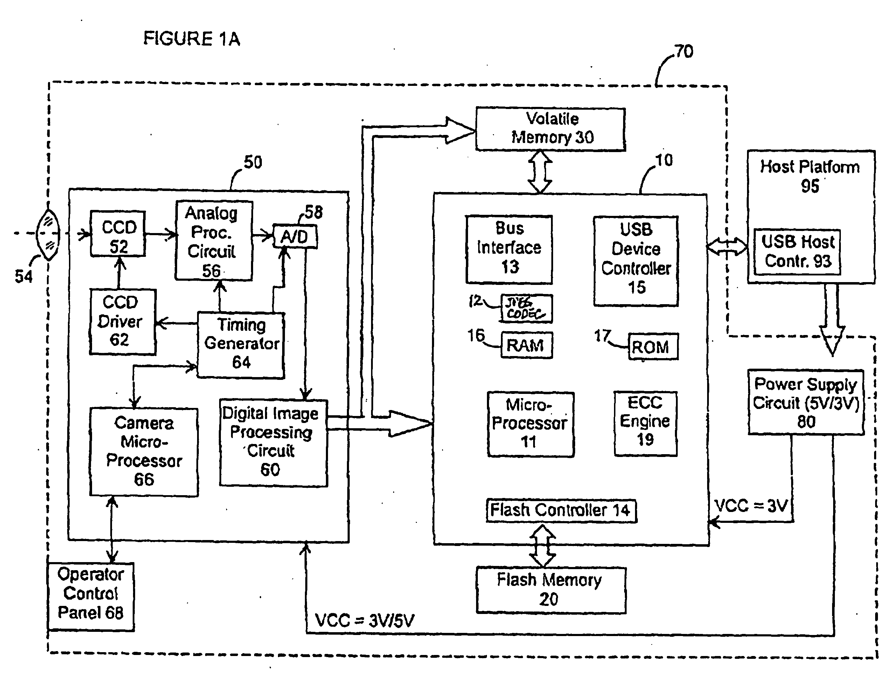

The present invention now will be described more fully with reference to Figures 1A through 4, in which preferred embodiments of the invention are shown. The present invention may, however, be embodied in many different forms and should not be construed as being limited to the embodiments set forth herein; rather these embodiments are provided so that this disclosure will be thorough and complete and will fully convey the invention to those skilled in the art. Indeed, the invention is intended to cover alternatives, modifications and equivalents of these embodiments, which will be included within the scope of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details. In other instances, well known methods, procedures, components, and circuits have not been described in detail as not to unnecessarily obscure aspects of the present invention.

Figure 1A is a block diagram illustrating functional blocks of one embodiment of the portable device of the present invention and an illustrative operational configuration thereof. Figure 1A shows a portable device 70 coupled to a host platform 95. In this embodiment, host platform 95 is coupled to a power supply circuit 80 located in portable device 70. Power supply circuit 80 draws power from host platform 95 and serves as a power source for various components of portable device 70. It is understood that in alternative embodiments, portable device 70 may include its own on-board power supply, thereby enabling operation of portable device 70 independently of the host platform. Such on-board power supplies are known in the art and may comprise, for example, rechargeable lithium ion batteries.

Referring still to Figure 1A, portable device 70 further includes an integrated circuit 10, a flash memory 20, a volatile memory 30 and a digital camera module 50. Integrated circuit 10 can be conveniently implemented as an application-specific integrated circuit (ASIC). In a currently preferred embodiment, flash memory 20 can have a storage capacity between 8 MB and 512 MB for storing image and/or audio data generated by camera module 50 in accordance with the present invention as described below. In one embodiment, volatile memory 30 is external to integrated circuit 10 and can comprise either a dynamic random access memory (DRAM) or a static random access memory (SRAM). Among other uses, volatile memory 30 can serve as an initial storage and staging area for image and/or audio data captured in accordance with the present invention. Integrated circuit 10 comprises a microprocessor 11 which, in one embodiment, is a RISC processor.

Referring still to Figure 1A, integrated circuit 10 further includes a bus interface 13 which facilitates communication between integrated circuit 10 and other components, such as volatile memory 30. Integrated circuit 10 further includes a flash controller 14 for controlling access to flash memory 20. Moreover, in a currently preferred embodiment, portable device 70 is compatible with the universal serial bus (USB) standard and includes a USB connector (not shown). In this embodiment, integrated circuit 10 also includes a USB device controller 15, which serves to control the communication between portable device 70 and host platform 95, such as a USB-compatible personal computer (PC) having a USB host controller 93 therein.

With reference still to Figure 1A, integrated circuit 10 also includes a volatile memory 16 and a non-volatile memory 17. In a preferred embodiment, volatile memory 16 is a random access memory (RAM) that serves as a working memory for microprocessor 11 during its operation. Non-volatile memory 17 is a read-only memory (ROM) in this embodiment and can be used to store firmware that perform various functions of portable device 70. Integrated circuit 10 further includes a JPEG Encoder-Decoder (CODEC) 12, which serves to compress image data in accordance with any of various known image file format compression algorithms. These file format algorithms include the Joint Photographic Experts Group (JPEG) file format, the Graphics Interchange Format (GIF) file format, and the PICT II file format (for Apple Macintosh computers). Where the data comprises video image and audio data (explained below), the data may be compressed in accordance with the Movie Picture Experts Group (MPEG) file format. The degree to which the image data is compressed may be selected by the operator, for example, using an operator control panel 68 in digital camera module 50 as described below. In one embodiment, the compressed data is sent via RAM 16 and then through USB device controller 15 to host platform 95. In another embodiment, the compressed data is sent via RAM 16 and then through flash controller 14 to flash memory 20 for storage.

Additionally, integrated circuit 10 includes an optional error checking (ECC) engine 19 for performing various error checking tasks during the operation of portable device 70. It should be appreciated that ECC engine 19 is well-suited to numerous implementations within the scope of the present invention. For example, ECC engine 19 can be implemented by software (e.g., firmware stored in a non-volatile memory), as part of microprocessor 11, or as a processor unit separate from microprocessor 11.

The internal components of camera module 50 are of conventional design. In general, an image is focused on the surface of an image-sensing device 52 via an optical lens 54. Image-sensing device 52 may be a charge-coupled device (CCD) or a MOS-type image photographing element. It may alternatively be an infrared (IR) or ultraviolet (UV) sensing device for camera embodiments intended to capture images beyond the visible light spectrum. The analog raw image data received from image-sensing device 52 is passed to an analog processing circuit 56 which may include a CDS cramp circuit, a gain adjustment circuit, a color balance circuit and various other systems for performing known image checking and enhancement functions. The output from analog processing circuit 56 is digitized by an A/D converter 58 and forwarded to a digital image processing circuit 60 for processing as explained hereinafter.

The CCD is driven by a CCD driver 62, which driver is synchronized with analog processing device 56 and A/D converter 58 by a timing signal generated by a timing generator 64 in a known manner. Timing generator 64 is controlled by a camera microprocessor 66. Camera module 50 may further include an operator control panel 68 for allowing a camera operator to manually select between various modes and functions of the camera module, including for example image resolution, image magnification, still frame or continuous video, etc. Operator-selected modes and functions are communicated from control panel 68 to camera microprocessor 66. Information from microprocessor 66 is also communicated to control panel 68 for display to the operator over an LCD (not shown) on panel 68, such as the amount of available space in memory and battery charge status. Microprocessor 66 also performs monitoring functions which are communicated to operator control panel 68. For example, in the case of an error in the operation of any of the above-described camera module components, microprocessor 66 can cause an error message to be displayed on the LCD of panel 68. Operator control panel 68 may also include an image capture button (not shown) for activating the image capture operation described above.

Those of skill in the art would appreciate that camera module 50 may capture still images and/or continuous video. For embodiments where camera module 50 captures continuous video, module 50 may further include an acoustic digitizer circuit (not shown) for digitizing sound recorded by a microphone in module 50. The digitized sound data associated with each image can be stored in flash memory 20 along with the digitized image information. As is known in the art, stored digital image data may be marked with the address of the corresponding digitized sound data, so that both the image and sound data may appear together when played back.

It is understood that the above description is merely by way of example, and that camera module 50 may include a variety of other and/or alternative known components and features in embodiments of the invention. Some of these known additional and/or alternative components and features are described in the following U.S. patents: U.S. Patent No. 6,239,837 B1 to Yamada et al.; U.S. Patent No. 6,208,380 B1 to Misawa; U.S. Patent No. 6,031,964 to Anderson; U.S. Patent No. 5,859,666 to Manabe; U.S. Patent No. 5,528,293 to Watanabe.

Digital image processing circuit 60 receives the digitized image information from analog processing circuit 56 and A/D converter 58 and processes the image so that it may be stored in flash memory 20 of integrated circuit 10 in a format that is compatible with host platform 95. By storing the image data in a format compatible with the host platform (e.g., in Windows FAT format where the host platform runs on the Windows operating system), the present invention eliminates the need for a proprietary software interface on the host platform, further enhancing the user-friendliness of the present invention. As is known in the art, digital processing circuit 60 may include processing circuits such as for example a luminance signal generating circuit, a color difference signal generating circuit and a gamma correcting circuit, such as described in U.S. Patent No. 6,208,380.
It is further contemplated that digital processing circuit 60 can be implemented as software (e.g., firmware) or hardware (e.g., processor/processor module) within the scope of the present invention.

Once the image and/or audio data is formatted by the digital processing circuit 60, the data is forwarded to the integrated circuit 10 for compression and storage as described above. In a preferred embodiment, digital processing circuit 60 sends the formatted image data via volatile memory 30, which acts as a buffer, to integrated circuit 10. JPEG CODEC 12 of integrated circuit 10 receives the image data from volatile memory 30 and performs any necessary compression. The processing of the data by digital processing circuit 60 in camera module 50 as described above allows the image and/or audio data to be stored in a format recognized by and compatible with host platform 95. Thus, as portable device 70 fits into the USB port of host platform 95, and as the data is stored in a file format compatible with host computer 95, no proprietary hardware or software is required on host platform 95 in order to download and process image or audio data from portable device 70 to host platform 95. It is understood that upon formatting of the data into a standard format, the data may either be stored in flash memory 20 as described above, or the data may be uploaded directly to host platform 95 for playback, further processing or storage within the host platform's memory.

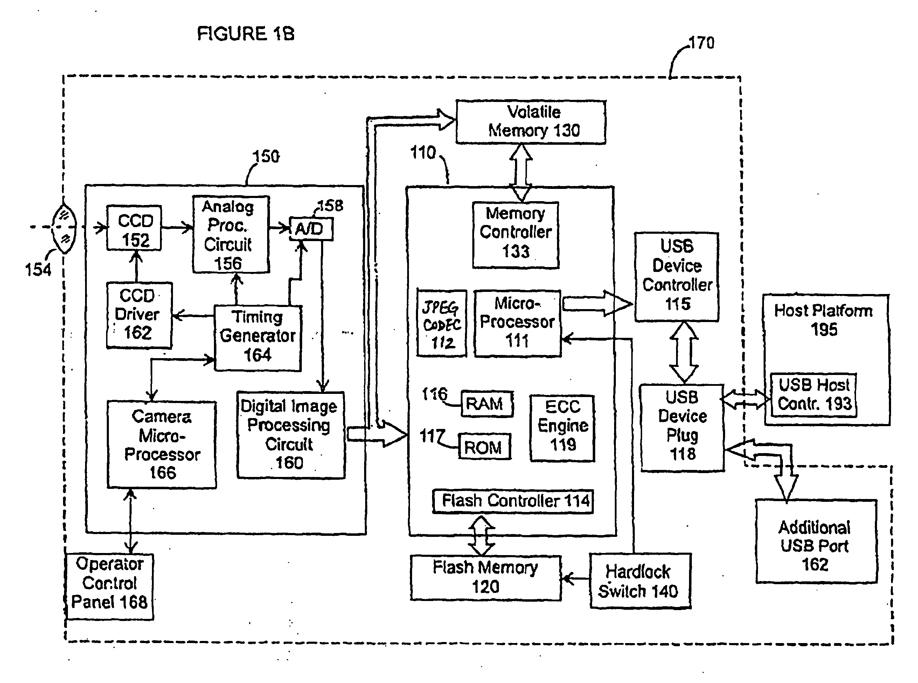

Reference is now made to Figure 1B, which is a block diagram illustrating functional blocks of another embodiment of the portable device of the present invention. In this embodiment, portable device 170 is compatible with the USB standard and includes a USB plug 118 which, as Figure 1 B shows, is coupled to a USB host controller 193 of a host platform 195. Optionally, portable device 170 further includes an additional USB port 162 that is coupled to USB plug 118. USB port 162 is provided as a convenient feature that can be used to couple other USB-compatible device(s) to the USB via portable device 170. In this embodiment, portable device 170 also includes a USB device controller 115 for controlling the communication between portable device 170 and host platform 195 via USB host controller 193. Portable device 170 further comprises an integrated circuit 110, a flash memory 120, a volatile memory 130 and a camera module 150. Integrated circuit 110 can be conveniently implemented as an ASIC. In one embodiment, volatile memory 130 comprises either a DRAM or a SRAM, which serves as an initial storage area for image and/or audio data captured in accordance with the present invention.

Referring still to Figure 1B, integrated circuit 110 comprises a microprocessor 111 which preferably is a RISC processor. Integrated circuit 110 further includes a flash controller 114 for controlling access to flash memory 120 and a memory controller 133 for controlling access to volatile memory 130. Integrated circuit 110 also includes a volatile memory 116 and a non-volatile memory 117. Preferably, volatile memory 116 comprises a RAM for use as a working memory for microprocessor 111 during its operation, while non-volatile memory 117 comprises a ROM for storing firmware that perform various functions of portable device 170. It should be appreciated that in an alternative embodiment of the present invention, such firmware may be stored in a non-volatile memory within the host platform rather than in portable device 170. Integrated circuit 110 further includes a JPEG CODEC 112 for compressing image data in accordance with any of various known image file format compression algorithms, such as the JPEG file format, the GIF file format, and the PICT II file format. Where the data comprises video image and audio data, the data may be compressed in accordance with the MPEG file format. The degree of data compression may be selected by the operator via a user interface in digital camera module 150 as explained below. In one embodiment, the compressed data is sent via RAM 116 and then through USB device controller 115 to host platform 195. In another embodiment, the compressed data is sent via RAM 116 and then through flash controller 114 to flash memory 120 for storage.

Additionally, integrated circuit 110 includes an optional error checking (ECC) engine 119 for performing various error checking tasks during the operation of portable device 170. It should be appreciated that ECC engine 119 can be implemented as software (e.g., firmware) or hardware (e.g., processor/processor module) within the scope of the present invention.

In a currently preferred embodiment as illustrated in Figure 1B, microprocessor 111 controls various components of portable device 170, including flash controller 114, USB device controller 115, RAM 116, ROM 117 (and execution of firmware code stored therein), JPEG CODEC 112, ECC engine 119 and memory controller 133. In this embodiment, portable device 170 also includes a write-protection switch 140 which triggers microprocessor 111 to disable read and write-access to flash memory 120 when activated.

The camera module 150 in the embodiment of Figure 1B operates as in the camera module 50 in the embodiment of Figure 1A, with like elements having reference numerals incremented by 100 in Figure 1B.

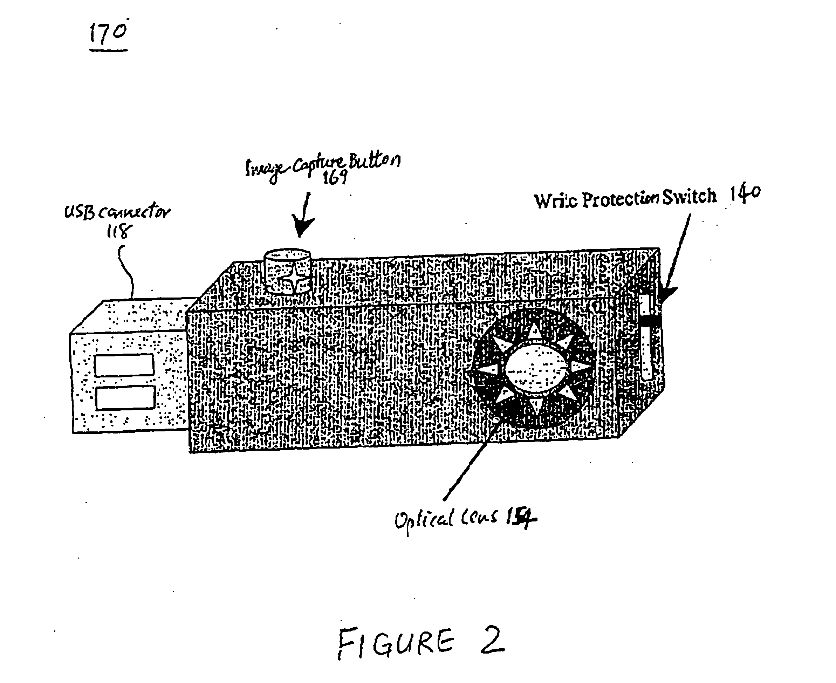

With reference next to Figure 2, a front perspective view of a portable storage device and digital camera in accordance with one embodiment of the present invention is shown. In Figure 2, portable device 170 is shown with USB connector 118 protruding from its front end. Camera module 150 is shown as being structurally integrated with portable device 170 in a unitary construction. Optical lens 154, an image capture button 169 and write-protection switch 140 are also shown. In this embodiment, USB connector 118 couples directly to the USB port of host platform 195.

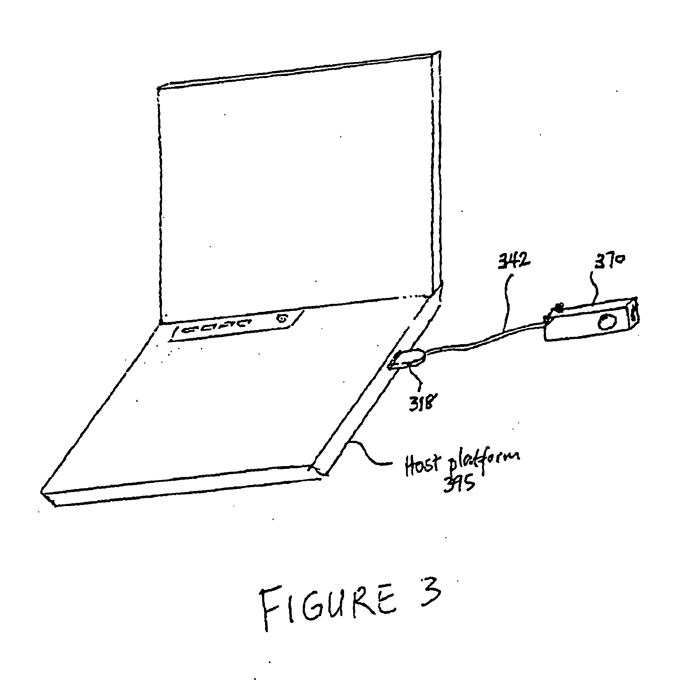

In an alternative example shown in the front perspective view of Figure 3, a portable device 370 may be coupled to a host platform 395 via a flexible communications cable 342 having a USB plug 318 at its end for being received in the USB port of host platform 395. This allows greater flexibility in the capture of image and/or audio data.

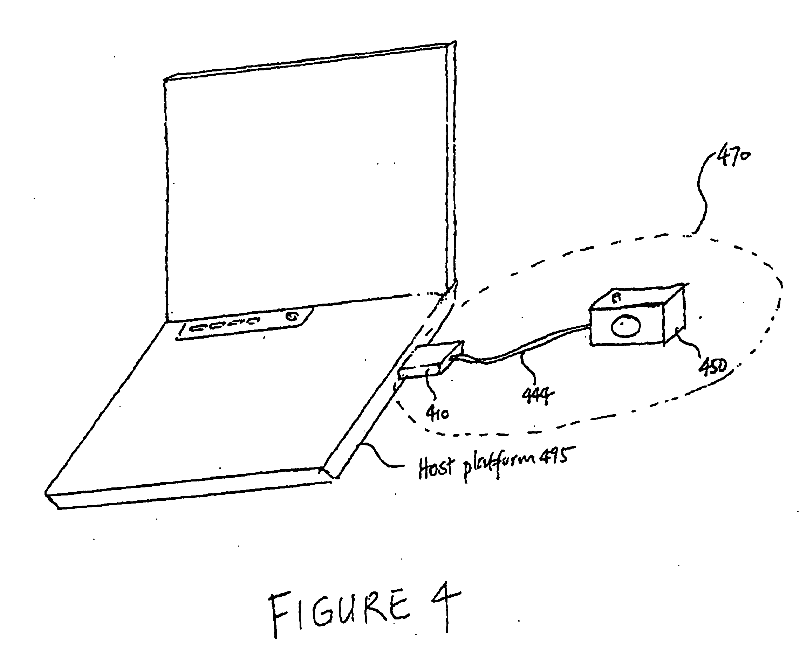

In a further example shown in the front perspective view of Figure 4, an integrated circuit portion 410 of a portable device 470 may be coupled directly to the USB port of a host platform 495, and a digital camera module 450 of portable device 470 may be connected to integrated circuit portion 410 via a flexible communications cable 444. This embodiment also provides a high degree of flexibility with respect to image and/or audio data capture.
U.S. Patent Application Serial No. 09/898,365 (the "'365 application"), entitled "A PORTABLE DEVICE HAVING BIOMETRICS-BASED AUTHENTICATION CAPABILITIES," which application is assigned to the owner of the present application, describes a portable memory device wherein memory may be accessed only upon proper authentication of the operator. In particular, the invention recited in the '365 application accepts identification information, such as a fingerprint, which is digitized and compared to an identification template stored in memory.

In an alternative embodiment, portable device 70 described above in accordance with the present invention may operate to accept identification information for authentication purposes as described in the '365 application. In particular, during an initial configuration process, a unique image, such as for example that of the operator's face, is captured by camera module 50 as described above. The image, or select portions of the image, are digitized, processed and stored as templates in a reserved area of flash memory 20. The stored template may alternatively be audio data.

Thereafter, before access to flash memory 20 is allowed, camera module 50 accepts image and/or audio information which is digitized and processed as described above. Some or all of this digital image and/or audio information is then compared against the stored image and/or audio template. Access to the information in the flash memory and/or host platform is only granted upon confirmation that the input image and/or audio information matches that in flash memory 20.

In a further alternative embodiment, graphical templates may be stored in a reserved area of flash memory 20, and added to an image captured by portable device 70. Such graphical templates can include borders, backgrounds and text. The image may be stored in flash memory 20 with or without the added graphical template.

In a still further embodiment of the present invention, portable device 70 may be used as a scanner, receiving an image and then storing the image in memory as described above. Such an embodiment may utilize known optical character recognition (OCR) algorithms to receive images including text and then translate the image into text files recognizable by conventional word processing programs. Such OCR algorithms may be resident in a reserved area of flash memory 20.

While preferred embodiments of the present invention have been described herein as using flash memory as a storage media, it should be appreciated that other types of non-volatile memory, such as ferroelectric random access memory (FRAM) or magnetic random access memory (MRAM), can also be used within the scope of the present invention. In addition, while such preferred embodiments have been described herein as being compatible with the USB standard, the portable device of the present invention is not intended to be restricted thereto. Rather, the present invention is intended to encompass portable devices that support other communication protocols and/or bus standards, such as the IEEE 1394 ("Firewire") standard.

## Claims

1. A portable device (70; 170) capable of operation with a personal computer (95; 195), the portable device (70; 170) comprising:
a coupling device;
a non-volatile memory (20; 120) in communication with said coupling device;
a digital camera (50; 150), being structurally integrated in the portable device together with said non-volatile memory, for capturing image and/or audio information, said non-volatile memory capable of storing said image and/or audio information;
a microprocessor (11; 111) for at least in part formatting said image and/or audio information in a standard image and/or audio file format compatible with the personal computer (95; 195);
**characterised in that** the portable device (70; 170) is a portable data storage device of the type for transferring data among different computers not otherwise connected,
the coupling device is in the form of an integral male connector (118) for fitting into a female connector of the personal computer (95; 195) such that the portable device (70; 170) is supported therein and is coupled to a serial bus of the personal computer (95; 195) thereby, and
the digital camera (50; 150) is operable as an authentication device by capturing a user's image and/or audio identification information for comparison with image and/or audio templates stored in the non-volatile memory (20; 120), such that access to the non-volatile memory (20; 120) is granted to the user provided that the captured user's identification information matches a corresponding image and/or audio template as stored in the nort-volatile memory (20; 120), and that access to the non-volatile memory (20; 120) is denied to the user otherwise.

2. A portable data storage device (70; 170) as recited in claim 1, said non-volatile memory comprising flash memory (20; 120).

3. A portable data storage device (70; 170) as recited in claim 1, said coupling device capable of coupling to a USB port of the personal computer (95; 195).

4. A portable data storage device (70; 170) as recited in claim 1, said standard image file format comprising a JPEG file format.

5. A portable data storage device (70; 170) as recited in claim 1, said standard image file format comprising a GIF file format

6. A portable data storage device (70; 170) as recited in claim 1, said standard image file format comprising a PICT II file format.

7. A portable data storage device (70; 170) as recited in claim 1, said standard image and/or audio file format comprising an MPEG file format.

8. A portable data storage device (70; 170) as recited in claim 1, further comprising a power supply circuit (80) for receiving power from the personal computer (95; 195) and providing said power to components of the portable device (70; 170).

9. A portable data storage device (70; 170) as recited in claim 1, further comprising a power source for providing power to components of the portable device (70; 170).

## Patentansprüche

1. Tragbare Einrichtung (70; 170), die zum Betrieb mit einem Personalcomputer (95; 195) befähigt ist, wobei die tragbare Einrichtung (70; 170) Folgendes umfasst:
eine Verbindungseinrichtung;
einen nichtflüchtigen Speicher (20; 120) in Kommunikation mit der Verbindungseinrichtung;
eine Digitalkamera (50; 150), die zusammen mit dem nichtflüchtigen Speicher strukturell in die tragbare Einrichtung integriert ist, um Bild- und/oder Audioinformation zu erfassen, wobei der nichtflüchtige Speicher befähigt ist, die Bild- und/oder Audioinformation zu speichern;
einen Mikroprozessor (11; 111), um mindestens teilweise die Bild- und/oder Audioinformation in einem standardmäßigen Bild- und/oder Audiodateiformat zu formatieren, das mit dem Personalcomputer (95; 195) kompatibel ist;
**dadurch gekennzeichnet, dass** die tragbare Einrichtung (70; 170) eine tragbare Datenspeichereinrichtung des Typs zur Datenübertragung zwischen verschiedenen Computern ist, die nicht anderweitig verbunden sind,
wobei die Verbindungseinrichtung die Form einer integrierten Steckverbindung (118) hat, um in eine Buchsensteckverbindung des Personalcomputers (95; 195) zu passen, sodass die tragbare Einrichtung (70; 170) darin unterstützt ist und **dadurch** an einen seriellen Bus des Personalcomputers (95; 195) gekoppelt ist, und
die Digitalkamera (50; 150) als eine Authentifizierungseinrichtung betriebsfähig ist, indem sie Bild- und/oder Audioidentifikationsinformation eines Teilnehmers zum Vergleich mit im nichtflüchtigen Speicher (20; 120) gespeicherten Bild- und/oder Audioschablonen erfasst, sodass dem Teilnehmer Zugang zum nichtflüchtigen Speicher (20; 120) unter der Voraussetzung gewährt wird, dass die erfasste Identifikationsinformation des Teilnehmers mit einer entsprechenden Bild- und/oder Audioschablone übereinstimmt, wie sie im nichtflüchtigen Speicher (20; 120) gespeichert ist, und dass anderweitig dem Teilnehmer Zugang zum nichtflüchtigen Speicher (20; 120) verweigert wird.

2. Tragbare Datenspeichereinrichtung (70; 170) nach Anspruch 1, wobei der nichtflüchtige Speicher Flash-Speicherung (20; 120) umfasst.

3. Tragbare Datenspeichereinrichtung (70; 170) nach Anspruch 1, wobei die Verbindungseinrichtung befähigt ist, sich an einen USB-Port des Personalcomputers (95; 195) anzukoppeln.

4. Tragbare Datenspeichereinrichtung (70; 170) nach Anspruch 1, wobei das standardmäßige Bilddateiformat ein JPEG-Dateiformat umfasst.

5. Tragbare Datenspeichereinrichtung (70; 170) nach Anspruch 1, wobei das standardmäßige Bilddateiformat ein GIF-Dateiformat umfasst.

6. Tragbare Datenspeichereinrichtung (70; 170) nach Anspruch 1, wobei das standardmäßige Bilddateiformat ein PICT-II-Dateiformat umfasst.

7. Tragbare Datenspeichereinrichtung (70; 170) nach Anspruch 1, wobei das standardmäßige Bild- und/oder Audiodateiformat ein MPEG-Dateiformat umfasst.

8. Tragbare Datenspeichereinrichtung (70; 170) nach Anspruch 1, außerdem eine Energiezufuhrschaltung (80) zum Empfangen von Leistung aus dem Personalcomputer (95; 195) und zum Bereitstellen der Leistung an Bauteile der tragbaren Einrichtung (70; 170) umfassend.

9. Tragbare Datenspeichereinrichtung (70; 170) nach Anspruch 1, außerdem eine Leistungsquelle zum Bereitstellen von Leistung an Bauteile der tragbaren Einrichtung (70; 170) umfassend.

## Revendications

1. Dispositif portable (70 ; 170) apte à être exploité avec un ordinateur personnel (95 ; 195), le dispositif portable (70 ; 170) comportant :
un dispositif de couplage ;
une mémoire non volatile (20 ; 120) en communication avec ledit dispositif de couplage ;
un appareil photo numérique (50 ; 150), lequel est structurellement intégré dans le dispositif portable avec ladite mémoire non volatile, pour capturer des informations d'images et/ou des informations audio, ladite mémoire non volatile étant apte à stocker lesdites informations d'images et/ou informations audio ;
un microprocesseur (11 ; 111) pour au moins formater partiellement lesdites informations d'images et/ou informations audio en un format de fichier image et/ou audio standard compatible avec l'ordinateur personnel (95 ; 195) ;
**caractérisé en ce que** le dispositif portable (70 ; 170) est un dispositif portable de stockage de données d'un type permettant le transfert de données entre différents ordinateurs non connectés ;
le dispositif de couplage est de la forme d'un connecteur mâle intégral (118) destiné à être monté sur un connecteur femelle de l'ordinateur personnel (95 ; 195), de sorte que le dispositif portable (70 ; 170) est pris en charge par celui-ci, et est couplé à un bus série de l'ordinateur personnel (95 ; 195) ; et
l'appareil photo numérique (50 ; 150) est exploitable en qualité de dispositif d'authentification en capturant des informations d'identification audio et/ou d'image d'un utilisateur en vue d'une comparaison avec des modèles audio et/ou d'image stockés dans la mémoire non volatile (20 ; 120), de sorte qu'un accès à la mémoire non volatile (20 ; 120) est accordé à l'utilisateur à condition que les informations d'identification capturées de l'utilisateur correspondent à un modèle audio et/ou d'image connexe, tel que stocké dans la mémoire non volatile (20 ; 120), et qu'un accès à la mémoire non volatile (20 ; 120) soit sinon refusé à l'utilisateur.

2. Dispositif portable de stockage de données (70 ; 170) selon la revendication 1, dans lequel ladite mémoire non volatile comporte une mémoire flash (20 ; 120).

3. Dispositif portable de stockage de données (70 ; 170) selon la revendication 1, dans lequel ledit dispositif de couplage est apte à être couplé à un port USB de l'ordinateur personnel (95 ; 195).

4. Dispositif portable de stockage de données (70 ; 170) selon la revendication 1, dans lequel ledit format de fichier image standard comporte un format de fichier JPEG.

5. Dispositif portable de stockage de données (70 ; 170) selon la revendication 1, dans lequel ledit format de fichier image standard comporte un format de fichier GIF.

6. Dispositif portable de stockage de données (70 ; 170) selon la revendication 1, dans lequel ledit format de fichier image standard comporte un format de fichier PICT II.

7. Dispositif portable de stockage de données (70 ; 170) selon la revendication 1, dans lequel ledit format de fichier audio et/ou image standard comporte un format de fichier MPEG.

8. Dispositif portable de stockage de données (70 ; 170) selon la revendication 1, lequel comporte en outre un circuit d'alimentation (80) pour recevoir une alimentation électrique en provenance de l'ordinateur personnel (95 ; 195) et délivrer ladite alimentation électrique à des composants du dispositif portable (70 ; 170).

9. Dispositif portable de stockage de données (70 ; 170) selon la revendication 1, lequel comporte en outre une source électrique pour délivrer l'alimentation électrique à des composants du dispositif portable (70 ; 170).
